# EUROPEAN PATENT SPECIFICATION

(11) **EP 4 488 040 B1**
(45) Date of publication and mention of the grant of the patent: **16.09.2026**
(21) Application number: 23382696.5
(22) Date of filing: 07.07.2023
(51) Int. Cl.: B29C 65/08, B29C 64/295, B23K 20/10, B23K 20/22, B23K 20/233, B29C 65/82, B33Y 10/00, B29C 65/16, B29C 65/30, B29C 65/32, B29C 65/78

(54) **ADDITIVE ULTRASONIC MANUFACTURING SYSTEM AND METHOD**
SYSTEM UND VERFAHREN ZUR GENERATIVEN ULTRASCHALLFERTIGUNG
SYSTÈME ET PROCÉDÉ DE FABRICATION ADDITIVE PAR ULTRASONS

(43) Date of publication of application: 08.01.2025
(73) Proprietor: Universidad De Salamanca, 37008 Salamanca (ES)
(72) Inventor: Guzmán de Villoria, Roberto, 49029 Zamora (ES); Maamri, Saber, 49029 Zamora (ES)
(74) Representative: Pons IP

(56) References cited:
- JP-A- 2008 001 037
- US-A1- 2015 068 662
- US-B2- 10 076 871

## Description

### OBJECT OF THE INVENTION

The present invention relates to additive manufacturing and printing devices and methods, more precisely, to ultrasonic devices for additive manufacturing.

Thus, it is an object of the invention a manufacturing system for additive manufacturing, printing and/or welding which allows to manufacture elements layer by layer applying simultaneously pressure and temperature over a manufacturing surface of said element.

Another object of the invention is an additive manufacturing method which allows manufacturing elements layer by layer applying simultaneously pressure and temperature and allows continuous manufacturing by modifying a welding angle.

### BACKGROUND ART

Fused filament fabrication (FFF) is a technique for manufacturing three-dimensional objects from thermoplastic materials or other similar materials. Machines using this technique can fabricate three-dimensional objects additively by depositing layers of material to additively build-up a three-dimensional object.

While these polymer-based techniques have been changed and improved over the years, currently, additive manufacturing systems by means of fused filament manufacturing (FFF) apply temperature in a controlled manner but do not control the pressure exerted on the molten material. The unique thickness control in this manufacturing method is performed by positioning the extruder head with respect to the substrate.

On the other hand, in the field of welding techniques for plastic materials, some techniques include the application of pressure and temperature in a controlled manner. For example, some ultrasonic welding techniques apply temperature and pressure, by using pneumatic systems.

Nevertheless, in the state of the art, there is not a solution for simultaneously applying temperature and pressure in a continuous and controlled manner in additive manufacturing systems.

Document JP2008001037 discloses a welder which adjusts the pressure to be applied to an article to be welded in units as fine as several gf/cm2 without the use of an expensive device, e.g. an air cylinder, and ensures a good reproducible welding margin at a low cost and a welding method using the welder. The welder has a welding electric horn and is attached to one end of an arm supported so as to pivot with a supporting point as the axis. The downward lever action of the arm having the welder is adjusted for application by means of weights arranged on the arm. The mechanism enables precise adjustment and retention of the applying pressure of the electric horn on welding.

Document US2015/068662A1 discloses a hybrid shaping-and-energizing system for use in efficiently joining together multiple workpieces while inhibiting establishment of weld material in unwanted areas. The system includes a shaping tool configured to form at least one recess in a proximate workpiece of the workpieces to be joined, and a weld-energy applicator connected to the shaping tool and configured to apply weld energy to the proximate workpiece. The recess is formed, and weld energy applied, so that molten workpiece material becomes disposed within the recess, thereby inhibiting formation of weld material in any undesired position.

Document US10076871B2 discloses a process, for locating a welding energy director, for effective welding together of multiple workpieces at an area of the director. The director includes positioning a workpiece arrangement in preparation to make approaches, for locating the director, wherein the workpiece arrangement includes a proximate workpiece of the multiple workpieces, a distal workpiece, and the welding director positioned therebetween. The process also includes performing a sub-routine comprising moving a locating implement toward the proximate workpiece. The routine also includes determining whether a push-back force, being received at the locating implement from the workpiece, indicates that the locating implement has been lowered to a local terminal point. The routine includes relocating, in response to a negative result, the implement for repeating until a positive result, and determining, in response to the positive results in the location determination, that the director is located directly beneath an area corresponding to the positive result.

### DESCRIPTION OF THE INVENTION

The invention consists of a system and a method for applying pressure and temperature simultaneously in an additive manufacturing procedure.

More particularly, one object of the invention is an additive ultrasonic manufacturing system configured for applying simultaneously pressure and temperature over a manufacturing surface of a material to be welded.

The continuous application of temperature and pressure improves the surface quality of the material to be welded, decreasing, at the same time, the pressure required for welding. The material to be welded could be a CFRP tape and, more particularly, could be Carbon Fiber Reinforced Thermo-Plastic (CFRTP). Also, combination of materials could be used such as thermoset on thermoplastic or metal on thermoplastic, among others.

The additive ultrasonic manufacturing system of the invention comprises a robot or a robotic arm. The robot or robotic arm can follow any kind of trajectory, such as, curved surfaces in the three direction of space, linear, 5 axis trajectories... Preferably, the robot can be selected from cartesian robots or delta robots. For example, the robot could be a computer numerical control (CNC) machine.

Also, the additive ultrasonic manufacturing system comprises a coupling unit. The coupling unit is intended to be attached to the robot or robotic arm and comprises a sliding channel. The sliding channel could comprise dovetail guides. More preferably, the sliding channel could be oriented in the vertical axis of the robot or robotic arm.

Also, the sliding channel could comprise recirculating linear bearings, comprising a linear guide and a movable support connected by bearing balls to the linear guide. Also, the sliding channel could comprise linear shaft round rails comprising rounded linear guides and a movable support connected to said linear guide. Also, the sliding channel could comprise a simple linear bearing comprising rounded linear guides and a plurality of pulleys connected to said linear guides.

The system of the invention further comprises a manufacturing head connected to the coupling unit by means of the sliding channel.

The manufacturing head, in turn, comprises at least one ultrasonic welder and a mass control unit, wherein the ultrasonic welder could comprise an ultrasonic transducer, a booster and an ultrasonic horn.

The system of the invention could further comprise an ultrasound control unit connected to the ultrasonic welder to control its power and amplitude. Also, for improving surface quality, the ultrasonic welder could be made of polymeric or ceramic material or could be polymeric or ceramic coated. In these cases, the polymeric or ceramic material could be selected from polyimide (such as Kapton^{®}), Polyehterimide (PEI), polyetheretherketone (PEEK), Polyetherketoneketone (PEKK), polyamides and carbon.

Alternatively, the additive ultrasonic manufacturing system of the invention can be covered with a polymeric film for improving surface quality, thus being placed said polymeric film between the ultrasonic welder and the material to be welded.

Also, other materials can be added between layers of material to be welded such as films, veils, particles, nanoparticles, which can be from polymers, metal, ceramics, etc.

The system of the invention could further comprise a support for supporting the material to be welded.

Also, a release tape could be placed on the support for facilitating the separation of the material to be welded from the manufacturing surface.

The mass control unit is configured to add and remove masses from the manufacturing head automatically. The mass control unit could comprise a mechanical system to add or remove masses. The mass control unit could be configured for moving the manufacturing head to a charging station or for moving a charging station to the manufacturing head or along with said manufacturing head.

In particular, the mass control unit could be configured similar to a CNC machine in which the manufacturing head goes to a certain area to be loaded with a different load. Also, the mass control unit could by many different systems such as a revolver to change the masses, a mechanism comprising belts or gears to change masses, among others.

Preferably, the mass control unit could comprise a guide attached to the manufacturing head and a plurality of masses intended to be placed in the guide. In this way, the force exerted on the material to be manufactured depends on the weight of the masses selected and the welding angle. The at least one ultrasonic welder comprises an ultrasonic horn, which has a shape selected from flat squared, flat rectangular. cylindrical, tapered, rounded, spherical or of a wheel-type. Also, the guide could be made of metal, ceramic or metal covered by a plastic film.

The additive ultrasonic manufacturing system of the invention could be used with material in the form of a tape or filament. Also, the system could be used with materials selected from composites, metals, plastics and ceramics.

The system of the invention as described allows the movement of the manufacturing head to manufacture complex pieces by depositing and joining material in the three directions of the space through a layer-by-layer process.

Also, the additive ultrasonic manufacturing system of the invention could further comprise an auxiliary unit which could be in the form of spring units, mechanical units or hydraulic units connected to the manufacturing head to apply additional pressure over the manufacturing surface. These units are particularly useful when printing surfaces are not perpendicular to the manufacturing head so as to control the exerted force.

The system of the invention could further comprise temperature and/or pressure sensors.

Preferably, the auxiliary unit of the system of the invention can also be in the form of electrical resistances, lasers, induction heating elements or substrate heating elements for supplying heat to the welding surface, thus, supplementing the heat produced by the ultrasonic welder.

In an alternative embodiment, the manufacturing process is carried out inside a housing. In this embodiment, the auxiliary unit can also be in the form of housing heating elements configured to supply heat to the housing.

The system of the invention could be used for continuous ultrasonic welding of composite materials, metals, plastics, and ceramics. Also, it could be used in additive printing, for printing objects layer-by-layer and for printing structures of manufactured materials. Moreover, the system could be used for welding objects and repairing structures.

The present invention also relates to an additive ultrasonic manufacturing method which uses the additive ultrasonic manufacturing system described.

The method of the invention comprises the steps:
a) determining a first amplitude and a first power for the ultrasonic welder;
b) determining a first mass for adding to the manufacturing head by using the mass control unit;
c) determining a first velocity for the manufacturing head;
d) activating the at least one ultrasonic welder applying the first power and the first amplitude;
e) moving the robot or robotic arm according to a predetermined path applying the first velocity;
f) measuring a temperature on the manufacturing surface;
g) measuring a pressure applied by the masses on the manufacturing surface;
h) modifying the first amplitude and the first power of the ultrasonic welder, and the first mass determined to increase or decrease the temperature and the pressure measured so as to achieve a welding temperature and a welding pressure for the material to be welded, previously known, maximizing at the same time the first velocity.

Also, in the step of moving the robot or robotic arm, the distance between the manufacturing surface of the material to be welded and the manufacturing head could be fixed to control the thickness of the material to be welded.

Also, complex closed loop systems and/or machine learning algorithms can be used in order to perform the step of modifying the first amplitude and the first power of the ultrasonic welder , and the first mass determined to increase or decrease the temperature and the pressure measured so as to achieve a welding temperature and a welding pressure for the material to be welded, previously known, maximizing at the same time the first velocity.

### DESCRIPTION OF THE DRAWINGS

Figure 1 shows an exemplary embodiment of the additive manufacturing system of the invention for simultaneous pressure and temperature application.
Figure 2 shows a detail of the sliding channel for connecting the manufacturing head to the robot.
Figure 3 shows an exemplary embodiment of the additive manufacturing system of the invention comprising a release film and a the CFRP tape to be welded and wherein the welding angle is perpendicular to the manufacturing surface.
Figure 4 shows the steps of an exemplary embodiment of the additive ultrasonic manufacturing method of the invention.
Figure 5 shows an exemplary embodiment of the additive manufacturing system of the invention wherein the welding angle is not perpendicular to the manufacturing surface and comprising a hydraulic system to compensate for the inclination of the masses.
Figure 6 shows an exemplary embodiment of the additive manufacturing system of the invention comprising polymeric films to improve the surface quality of the material, an adhesive tape between the CFRP tapes to be welded and a release film for removing the welded material from a support.
Figure 7 shows an exemplary embodiment of the additive manufacturing system of the invention without polymeric films and without adhesive tape.
Figure 8 shows exemplary embodiments of the sliding channel of the additive manufacturing system of the invention.
Figure 9 shows a micrograph image of two CFRP tapes welded using the system and method of the invention.
Figure 10 shows another micrograph image of multiple CFRP tapes welded in different directions using the system and method of the invention.

### PREFERRED EMBODIMENTS OF THE INVENTION

The invention relates to a system and a method for additive ultrasonic manufacturing which allows applying simultaneously pressure and temperature over a manufacturing surface (13) of a material to be welded (14).

The invention is characterized in that the ultrasonic manufacturing system applies the pressure and temperature in a controlled manner, thus, allowing continuous welding, and avoiding the need for pneumatic systems.

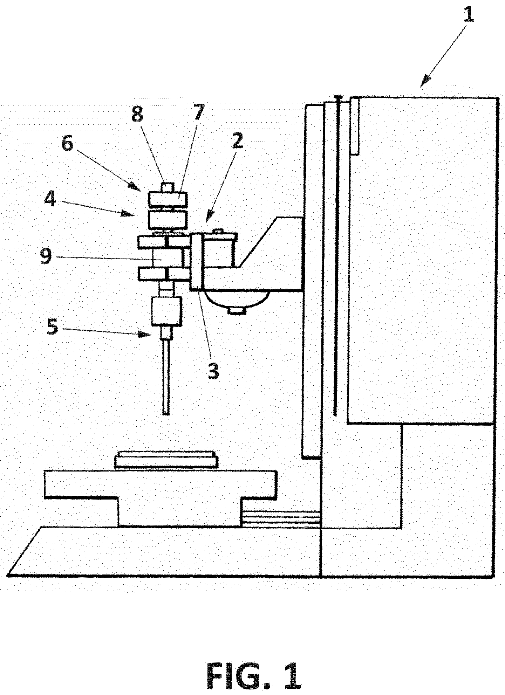

Figure 1 shows an exemplary embodiment of the additive ultrasonic manufacturing system of the invention.

As shown in Figure 1, the system comprises a CNC robot (1), a coupling unit (2) and a manufacturing head (4). The coupling unit (2) is attached to the robot (1) and comprises a sliding channel (3), so that the manufacturing head (4) is connected to the coupling unit (2) by means of said sliding channel (3).

More preferably, the slide direction of the manufacturing head (4) in the coupling unit (2) is the vertical axis (z-axis), as shown in Figure 1.

The manufacturing head (4) comprises an ultrasonic welder (5), comprising an ultrasonic transducer (9), a booster and an ultrasonic horn, and a mass control unit (6) to add and remove masses (7) from the manufacturing head (4) automatically. The ultrasonic welder (5) can acquire different geometries in order to apply the pressure efficiently.

The system shown in Figure 1 also comprises an ultrasound control unit to modify continuously the power of the ultrasonic welder (5), thus, controlling the amplitude of the vibration. In this way, the ultrasound control unit could maintain a constant amplitude in the ultrasonic welder (5), varying its power, a constant power, varying its amplitude.

The mass control unit (6) automatically adds and removes masses (7), changing the weight over the manufacturing surface (13), to apply a constant pressure. In this way, the force exerted on the manufacturing surface (13) depends on the weight of the masses (7) selected and a welding angle.

Having these characteristics, the system of the invention allows the movement of the manufacturing head (4) in such a way that complex pieces can be made, depositing and joining material in the x, y and z directions through a layer-by-layer process. Alternatively, the movement could be carried out in the material to be welded (14), thus maintaining the manufacturing head (4) immobile during the manufacturing process.

Also, the additive ultrasonic manufacturing system of the invention could comprise sensors of pressure, temperature, etc.

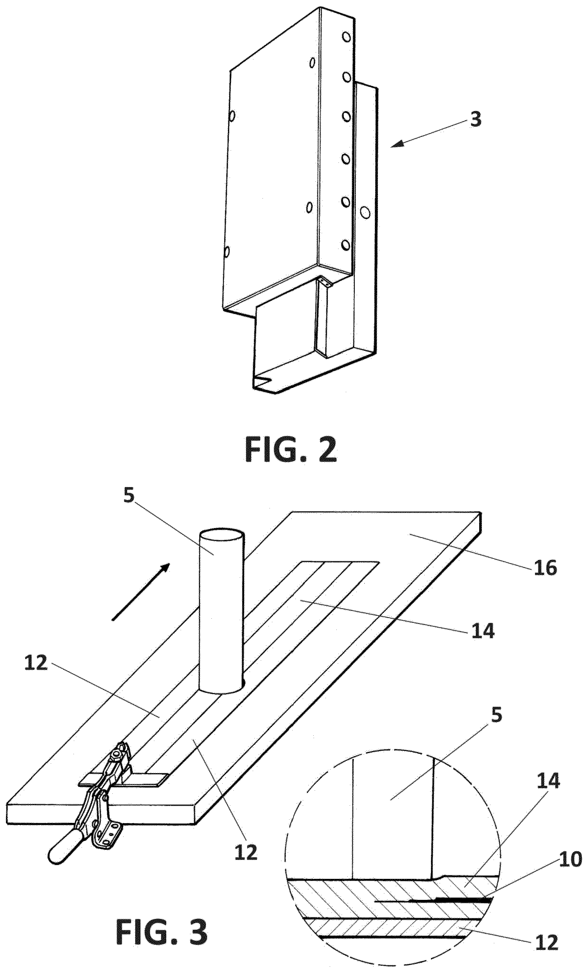

Figure 2 shows a detailed view of the sliding channel (3), which in this case is a linear dovetail guide.

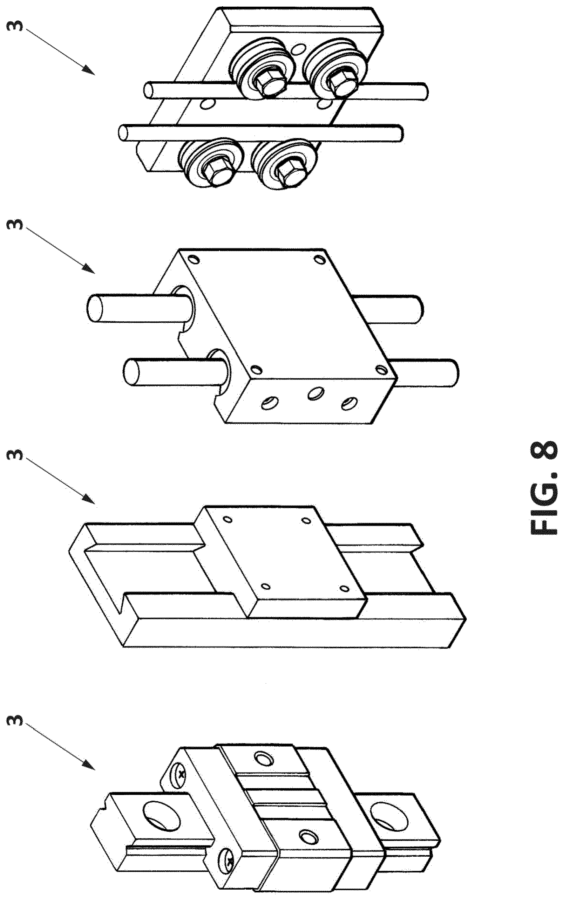

Figure 8 shows other alternative configurations for the sliding channel. In one of the embodiments, the sliding channel which could comprise recirculating linear bearings, comprising a linear guide and a movable support connected by bearing balls to the linear guide. Also, the sliding channel could comprise linear shaft round rails comprising rounded linear guides and a movable support connected to said linear guide. Also, the sliding channel could comprise a simple linear bearing comprising rounded linear guides and a plurality of pulleys connected to said linear guides.

Figure 3 shows an example of welding using the system of the invention. In this case, the material to be welded (14) is in the form of a tape, although it could be also a filament.

In this example, the pressure generated by the masses (7) is applied perpendicular to the manufacturing surface (13).

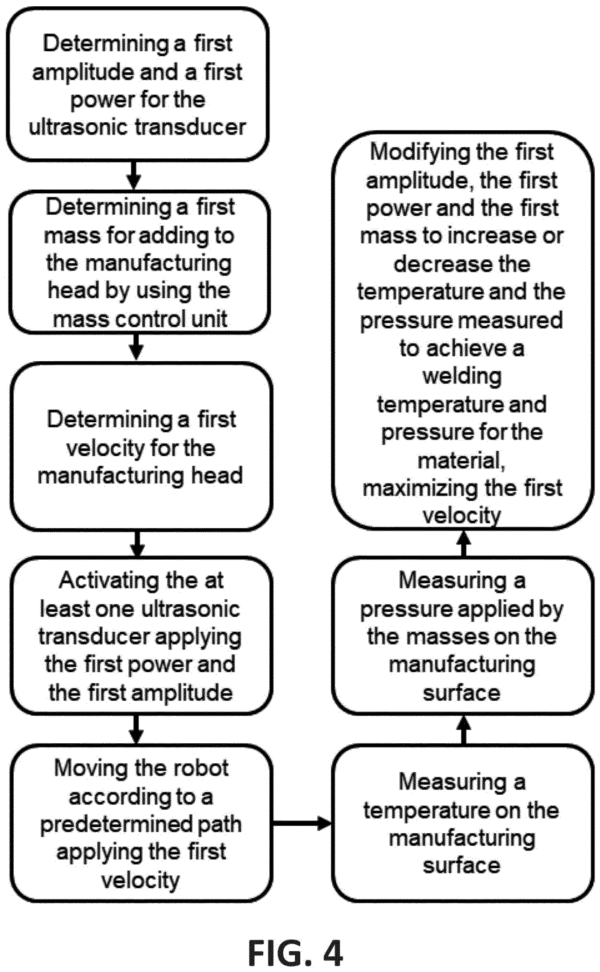

Figure 4 shows the steps of the additive ultrasonic manufacturing method of the invention. As shown in Figure 4 the steps are:
a) determining a first amplitude and a first power for the ultrasonic welder (5);
b) determining a first mass (7) for adding to the manufacturing head (4) by using the mass control unit (6);
c) determining a first velocity for the manufacturing head (4);
d) activating the at least one ultrasonic welder (5) applying the first power and the first amplitude;
e) moving the robot (1) or robotic arm (1) according to a predetermined path applying the first velocity;
f) measuring a temperature on the manufacturing surface (13);
g) measuring a pressure applied by the first mass (7) on the manufacturing surface (13);
h) modifying the first amplitude and the first power of the ultrasonic welder (5), and the first mass (7) determined to increase or decrease the temperature and the pressure measured so as to achieve a welding temperature and a welding pressure for the material to be welded (14), previously known, maximizing at the same time the first velocity.

In this procedure, the welding force and velocity amplitude can be measured indirectly from the input voltage and current.

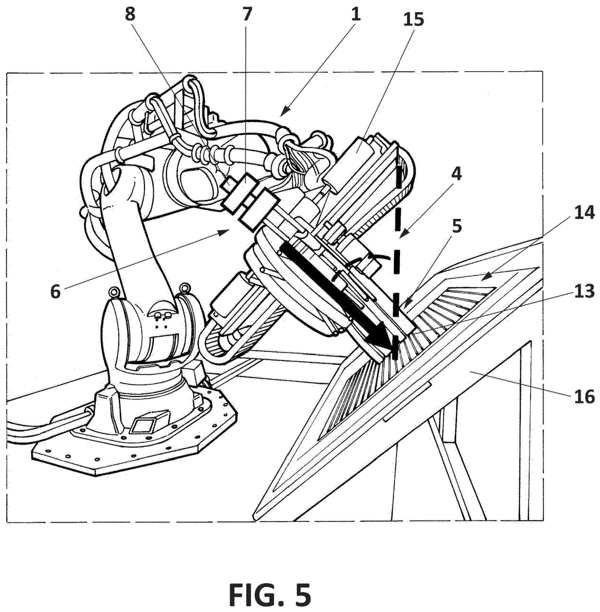

Figure 5 shows an exemplary embodiment of the system of the invention wherein the welding angle is not perpendicular to the manufacturing surface (13).

In this case, the force applied by the masses (7) could be supplemented by using an auxiliary unit (15) to increase the pressure applied on the printing surface. The auxiliary unit (15) could be a spring unit, a mechanical unit, such as servomotors, or an hydraulic unit.

The auxiliary unit (15) could be used for complementing the pressure applied by the mass control unit (6) or to decrease the effect of the mass control unit (6).

Moreover, the auxiliary unit (15) could also comprise an electrical resistance, a laser, an induction element, a substrate heating element and other elements for supplementing with heat the manufacturing procedure. Thus, the heat applied by the vibration produced by the ultrasonic welder (5) would be supplemented by the auxiliary unit (15). Other techniques could be used to supplement with heat the manufacturing procedure, such as, automated fiber placement and automated tape lay-up.

Also, in order to improve the surface quality of the material to be welded, the ultrasonic welder (5) can be made of polymeric or ceramic material or coated with polymeric or ceramic material, regardless of its geometry.

Polymeric or ceramic materials can be selected from polyimide (such as Kapton^{®}), Polyehterimide (PEI), PEEK, PEKK, polyamides, and carbon, among others.

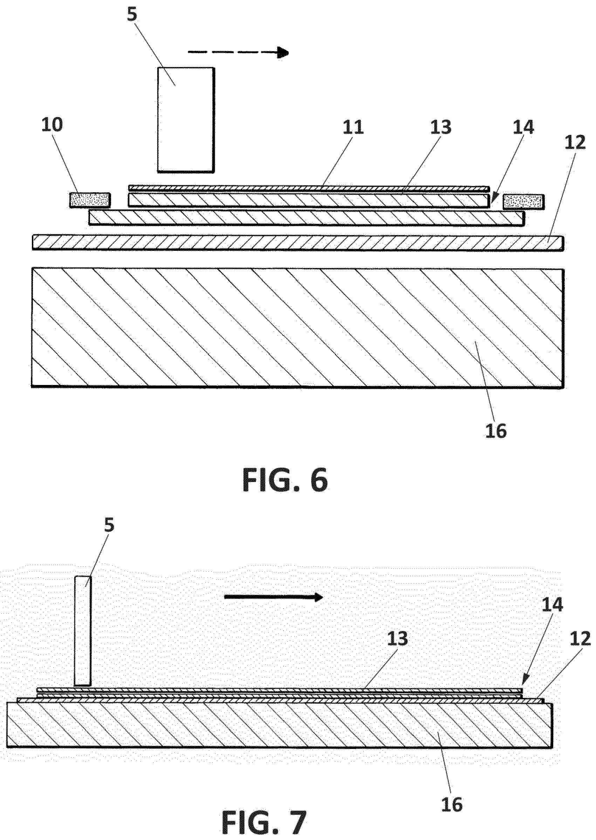

As shown in Figure 6, a polymeric film (11) can be attached on the material to be welded (14) In this case, the system of the invention could manufacturing surface (13) for supporting the material to be welded (14).

Also a release tape (12), could be attached to the support (16). As shown in Figure 6, the polymeric film (11) is placed over the material to be welded (14) , in this case, a Carbon Fiber Reinforced Polymer (CFRP) tape. The two tapes of Carbon Fiber Reinforced Polymer (CFRP) (14) are joint by an adhesive tape (10), and both tapes of CFRP (14) and the adhesive tape (10) are placed over the release tape (12), which, in turn, is on the manufacturing surface (13). The use of a polymeric film (11) allows to improve the surface finish on the manufacturing surface (13) and to avoid a potential damage caused by the manufacturing head (4).

The figure 7 shows an alternative embodiment wherein the polymeric film (11) and the adhesive tape (10) have been removed since they are not needed to perform the welding process, although they allows to improve the surface finish on the manufacturing surface (13), as explained before.

In the ultrasonic welder (5) used in the present invention energy-concentrating films are not needed.

The additive ultrasonic manufacturing system of the invention could be used for automatic manufacture of composite materials or for additive manufacturing joining, thus, allowing the union of composite, polymeric, ceramic, metallic materials. In particular, the present invention could be applied for manufacturing by deposition of fused filament.

Also, in order to optimize the quality of the welded region, a metal block can be added after the manufacturing head (4). This metal block reduces the cool down ramp of the material to be welded, thus, affecting the mechanical properties of the welding.

In a preferred embodiment of the invention, the ultrasonic welding method is made by following the steps of:
First, the material to be welded (14) is prepared. The carbon fiber reinforcement thermoplastic (PA, PET, PEEK, PAEK ....) material (14) is prepared by cutting to a desired length. Also, it has to be ensured that tapes or filaments of material to be welded (14) are free of any contaminants such as dirt, oil, or grease.

Then, a first piece of tape or filament to be welded (14) is fixed on a manufacturing surface (13) by using an adhesive tape (11), such as polyimide. The ultrasonic welder (5) will be positioned over an initial point to be welded. At this point, the ultrasonic welder (5) does not contact the first piece of material to be welded (14), CFRP tape. Next, a second piece of tape or filament to be welded (14) is placed between the ultrasonic welder (5) and the first piece of tape or filament.

Then, the ultrasonic welder (5) is moved vertically downwards until it contacts the second piece of material to be welded (14) to apply the pressure selected by the mass control unit (6), by means of masses (7) placed on top of a guide (8). The pressure applied by the system is the weight of the system, including masses (7) selected by the mass control unit (6), exerted on the contact point. In this case, the pressure exerted is from 0.1 bar to 10 bar, which is significantly lower than the pressure used in similar systems from the state of the art (16 bar or higher). In particular, a pressure of 0.7bar has been registered in some examples of the invention.

In this case, the ultrasonic welder (5) has a rounded bottom surface, (could have other shapes) with diameters from 2mm to 25mm, and an amplitude, from peak to peak, from 5um to 200um. It has been used an ultrasonic welder (5) with a metallic horn, made of Titanium Ti-6Al-4V. The ultrasonic frequencies used are close to 20 kHz.

Once the ultrasonic welder (5) has travelled along all the surface of the piece of material to be welded (14), the ultrasonic welder (5) is moved upwards.

The velocity of the ultrasonic welder (5) can be from 0.1mm/s to 200mm/s and its power can be as low as 10OW to 100W, which is significantly lower than state of the art systems (1500-2200 W). In particular, a velocity of 5mm/s and a power of 60-80W have been registered in some examples of the invention.

Also, some tests have been performed on the produced samples to see the strength and quality of the welded joint:
- A high bonding strength test, that is, the force required to break the joint. The shear strength of the welded joint is measured by applying a tensile force to the joint until it breaks according to single lap shear test (SLS) ASTM D3165-07 and ASTM D2344. Values from 10MPa to 60Mpa have been obtained. In particular, values of 26±7MPA have been obtained for CFPA.
- A joint quality test. The quality of the welded joint is assessed by examining the cross section of the samples and look the defects in the joint such as voids, porosity, or incomplete fusion. It has been obtained porosities from 0.1% to 10%, depending on the welding parameters. In particular, less than 2% of porosity has been obtained in some examples of the invention.

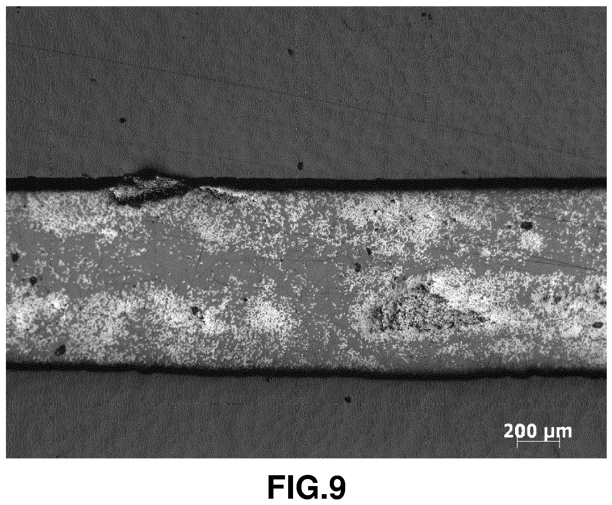

Figure 9 show a micrograph image of the result obtained by the proposed system and method. In the image, it could be observed that the porosity obtained is quite low and the quality of the welded region is high. In particular, the figure shows two CFRP tapes welded using the system and method of the invention.

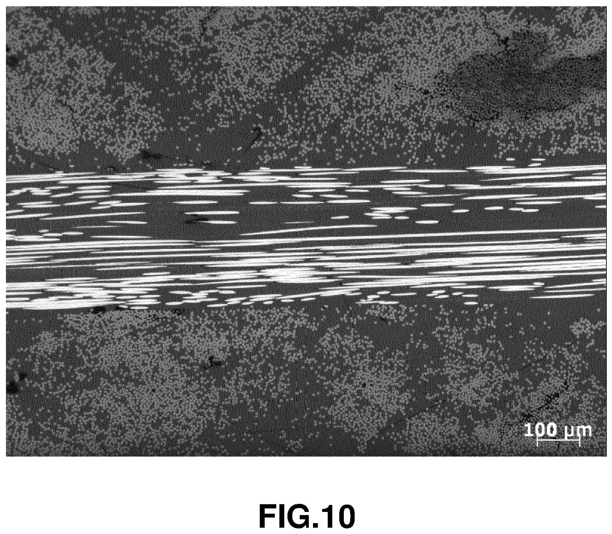

In figure 10, it is shown a piece comprising a plurality of CFRP tapes welded in different directions using the system and method of the invention

## Claims

1. An additive ultrasonic manufacturing system for applying simultaneously pressure and temperature over a manufacturing surface (13) of a material to be welded (14), wherein the additive ultrasonic manufacturing system comprises:
- a robot or a robotic arm (1);
- a coupling unit (2), attached to the robot or robotic arm (1) and comprising a sliding channel (3);
- a manufacturing head (4) connected to the coupling unit (2) by means of the sliding channel (3), and comprising:
∘ at least one ultrasonic welder (5),
∘ a mass control unit (6), configured to add and remove masses (7) from the manufacturing head (4) automatically.

2. The additive ultrasonic manufacturing system according to claim 1, wherein the mass control unit (6) comprises a guide (8) attached to the manufacturing head (4) and a plurality of masses (7) intended to be placed in the guide (8).

3. The additive ultrasonic manufacturing system according to any of claims 1 to 2, wherein the material to be welded (14) is in the form of a tape or filament.

4. The additive ultrasonic manufacturing system according to any of claims 1 to 3, wherein the material to be welded (14) is selected from CFRP, other composites, metals, plastics and ceramics.

5. The additive ultrasonic manufacturing system according to any of claims 1 to 4, wherein the robot (1) is selected from cartesian robots or delta robots.

6. The additive ultrasonic manufacturing system according to any of claims 1 to 5, wherein the sliding channel (3) comprises dovetail guides, recirculating linear bearings, linear shaft round rails and/or linear bearings.

7. The additive ultrasonic manufacturing system according to any of claims 2 to 6, wherein the at least one ultrasonic welder (5) comprises an ultrasonic horn, which has a shape selected from flat squared, flat rectangular, cylindrical, tapered, rounded, spherical or of a wheel-type.

8. The additive ultrasonic manufacturing system according to any of claims 1 to 7, further comprising an auxiliary unit (15), being spring units, mechanical units or hydraulic units, connected to the manufacturing head to provide an additional pressure applied over the manufacturing surface (13).

9. The additive ultrasonic manufacturing system according to any of claims 1 to 8, further comprises an ultrasound control unit connected to the ultrasonic welder (5) to control its power and amplitude.

10. The additive ultrasonic manufacturing system according to any of claims 1 to 9, further comprises a polymeric film (11) intended to be placed on the manufacturing surface (14) or wherein the ultrasonic welder (5) is made of polymeric or ceramic material, is polymeric or ceramic coated, and wherein the polymeric or ceramic material is preferably selected from polyimide, Polyehterimide (PEI), polyetheretherketone (PEEK), Polyetherketoneketone (PEKK), polyamides and carbon.

11. The additive ultrasonic manufacturing system according to any of claims 8 to 10, wherein the auxiliary unit (15) further comprises electrical resistances, lasers, induction heating elements, housing heating elements or substrate heating elements for supplying heat to the manufacturing surface (13).

12. The additive ultrasonic manufacturing system according to any of claims 1 to 11, further comprises temperature and/or pressure sensors.

13. An additive ultrasonic manufacturing method which uses the additive ultrasonic manufacturing system according to any of claims 1 to 12 and a material to be welded (14), the method comprising the steps of:
a) determining a first amplitude and a first power for the ultrasonic welder (5);
b) determining a first mass (7) for adding to the manufacturing head (4) by using the mass control unit (6);
c) determining a first velocity for the manufacturing head (4);
d) activating the at least one ultrasonic welder (5) applying the first power and the first amplitude;
e) moving the robot (1) or robotic arm (1) according to a predetermined path applying the first velocity;
f) measuring a temperature on the manufacturing surface (13);
g) measuring a pressure applied by the masses on the manufacturing surface (13);
h) modifying the first amplitude and the first power of the ultrasonic welder (5), and the first mass (7) determined to increase or decrease the temperature and the pressure measured so as to achieve a welding temperature and a welding pressure for the material to be welded (14), previously known, maximizing at the same time the first velocity.

14. An additive ultrasonic manufacturing method according to claim 13, wherein a distance between the manufacturing surface (13) of the material to be welded (14) and the manufacturing head (4) in the step of moving the robot or robotic arm is fixed to control the thickness of the material to be welded (14).

15. An additive ultrasonic manufacturing method according to claim 13, wherein the step of modifying the first amplitude and the first power of the ultrasonic welder (5), and the first mass (7) determined to increase or decrease the temperature and the pressure measured so as to achieve a welding temperature and a welding pressure for the material to be welded (14), previously known, maximizing at the same time the first velocity, is performed by using complex closed loop systems and/or machine learning algorithms.

## Patentansprüche

1. Ein additives Ultraschall-Fertigungssystem zum gleichzeitigen Aufbringen von Druck und Temperatur auf eine Fertigungsfläche (13) eines zu schweißenden Materials (14), wobei das additive Ultraschall-Fertigungssystem Folgendes umfasst:
- einen Roboter oder einen Roboterarm (1);
- eine Kopplungseinheit (2), die an dem Roboter oder Roboterarm (1) angebracht ist und einen Gleitkanal (3) umfasst;
- einen Fertigungskopf (4), der mittels des Gleitkanals (3) mit der Kupplungseinheit (2) verbunden ist und Folgendes umfasst:
∘ mindestens ein Ultraschallschweißgerät (5),
∘ eine Massensteuereinheit (6), die derart ausgebildet ist, dass sie automatisch Massen (7) zum Fertigungskopf (4) hinzufügt und von diesem entfernt.

2. Additives Ultraschall-Herstellungssystem nach Anspruch 1, wobei die Massensteuereinheit (6) eine am Herstellungskopf (4) angebrachte Führung (8) und eine Mehrzahl von Massen (7) umfasst, die dazu bestimmt sind, in der Führung (8) platziert zu werden.

3. Additives Ultraschall-Fertigungssystem nach einem der Ansprüche 1 bis 2, wobei das zu schweißende Material (14) in Form eines Bandes oder eines Filaments vorliegt.

4. Additives Ultraschall-Fertigungssystem nach einem der Ansprüche 1 bis 3, wobei das zu schweißende Material (14) aus CFK, anderen Verbundwerkstoffen, Metallen, Kunststoffen und Keramiken ausgewählt ist.

5. Additives Ultraschall-Fertigungssystem nach einem der Ansprüche 1 bis 4, wobei der Roboter (1) aus kartesischen Robotern oder Delta-Robotern ausgewählt ist.

6. Additives Ultraschall-Fertigungssystem nach einem der Ansprüche 1 bis 5, wobei der Gleitkanal (3) Schwalbenschwanzführungen, Umlauflinearlager, lineare Wellenrundschienen und/oder Linearlager umfasst.

7. Additives Ultraschall-Fertigungssystem nach einem der Ansprüche 2 bis 6, wobei das mindestens eine Ultraschallschweißgerät (5) ein Ultraschallhorn umfasst, das eine Form aufweist, die aus flach quadratisch, flach rechteckig, zylindrisch, verjüngt, abgerundet, kugelförmig oder radförmig ausgewählt ist.

8. Additives Ultraschall-Fertigungssystem nach einem der Ansprüche 1 bis 7, ferner umfassend eine Hilfseinheit (15), bei der es sich um Federeinheiten, mechanische Einheiten oder Hydraulikeinheiten handelt, die mit dem Fertigungskopf verbunden sind, um einen zusätzlichen Druck bereitzustellen, der auf die Fertigungsfläche (13) aufgebracht wird.

9. Additives Ultraschall-Fertigungssystem nach einem der Ansprüche 1 bis 8, ferner umfassend eine Ultraschall-Steuereinheit, die mit dem Ultraschallschweißgerät (5) verbunden ist, um dessen Leistung und Amplitude zu steuern.

10. Additives Ultraschall-Herstellungssystem nach einem der Ansprüche 1 bis 9, ferner umfassend eine Polymerfolie (11), die dazu bestimmt ist, auf der Herstellungsfläche (14) platziert zu werden, oder wobei das Ultraschallschweißgerät (5) aus Polymer- oder Keramikmaterial hergestellt ist, mit Polymer oder Keramik beschichtet ist, und wobei das Polymer- oder Keramikmaterial vorzugsweise aus Polyimid, Polyetherimid (PEI), Polyetheretherketon (PEEK), Polyetherketonketon (PEKK), Polyamiden und Kohlenstoff ausgewählt ist.

11. Additives Ultraschall-Fertigungssystem nach einem der Ansprüche 8 bis 10, wobei die Hilfseinheit (15) ferner elektrische Widerstände, Laser, Induktionsheizelemente, Gehäuseheizelemente oder Substratheizelemente zum Zuführen von Wärme an die Fertigungsfläche (13) umfasst.

12. Additives Ultraschall-Fertigungssystem nach einem der Ansprüche 1 bis 11, ferner umfassend Temperatur- und/oder Drucksensoren.

13. Additives Ultraschall-Herstellungsverfahren, das das additive Ultraschall-Herstellungssystem nach einem der Ansprüche 1 bis 12 und ein zu schweißendes Material (14) verwendet, wobei das Verfahren die folgenden Schritte umfasst:
a) Bestimmen einer ersten Amplitude und einer ersten Leistung für das Ultraschallschweißgerät (5);
b) Bestimmen einer ersten Masse (7) zum Hinzufügen zum Fertigungskopf (4) unter Verwendung der Massensteuereinheit (6);
c) Bestimmen einer ersten Geschwindigkeit für den Fertigungskopf (4);
d) Aktivieren des mindestens einen Ultraschallschweißgeräts (5) unter Anwendung der ersten Leistung und der ersten Amplitude;
e) Bewegen des Roboters (1) oder Roboterarms (1) gemäß einem vorbestimmten Weg unter Anwendung der ersten Geschwindigkeit;
f) Messen einer Temperatur auf der Fertigungsfläche (13);
g) Messen eines von den Massen auf die Fertigungsfläche (13) aufgebrachten Drucks;
h) Verändern der ersten Amplitude und der ersten Leistung des Ultraschallschweißgeräts (5) und der ersten Masse (7), die bestimmt wurden, um die Temperatur und den gemessenen Druck zu erhöhen oder zu verringern, um eine zuvor bekannte Schweißtemperatur und Schweißdruck für das zu schweißende Material (14) zu erreichen, wobei gleichzeitig die erste Geschwindigkeit maximiert wird.

14. Additives Ultraschall-Herstellungsverfahren nach Anspruch 13, wobei ein Abstand zwischen der Fertigungsfläche (13) des zu schweißenden Materials (14) und dem Fertigungskopf (4) im Schritt des Bewegens des Roboters oder Roboterarms festgelegt ist, um die Dicke des zu schweißenden Materials (14) zu steuern.

15. Additives Ultraschall-Herstellungsverfahren nach Anspruch 13, wobei der Schritt des Veränderns der ersten Amplitude und der ersten Leistung des Ultraschallschweißgeräts (5) und der ersten Masse (7), die bestimmt wurden, um die Temperatur und den Druck zu erhöhen oder zu verringern, die gemessen werden, um eine zuvor bekannte Schweißtemperatur und Schweißdruck für das zu schweißende Material (14) zu erreichen, wobei gleichzeitig die erste Geschwindigkeit maximiert wird, unter Verwendung komplexer geschlossener Schleifensysteme und/oder maschineller Lernalgorithmen durchgeführt wird.

## Revendications

1. Système de fabrication additive par ultrasons pour l'application simultanément de pression et de température sur une surface de fabrication (13) d'un matériau à souder (14), dans lequel le système de fabrication additive par ultrasons comprend :
- un robot ou un bras robotisé (1) ;
- une unité d'accouplement (2), fixée au robot ou au bras robotisé (1) et comprenant un canal coulissant (3) ;
- une tête de fabrication (4) reliée à l'unité d'accouplement (2) au moyen du canal coulissant (3), et comprenant :
∘ au moins un soudeur à ultrasons (5),
∘ une unité de commande de masse (6), conçue pour ajouter et retirer automatiquement des masses (7) de la tête de fabrication (4).

2. Système de fabrication additive par ultrasons selon la revendication 1, dans lequel l'unité de commande de masse (6) comprend un guide (8) fixé à la tête de fabrication (4) et une pluralité de masses (7) destinées à être placées dans le guide (8).

3. Système de fabrication additive par ultrasons selon l'une quelconque des revendications 1 à 2, dans lequel le matériau à souder (14) se présente sous la forme d'un ruban ou d'un filament.

4. Système de fabrication additive par ultrasons selon l'une quelconque des revendications 1 à 3, dans lequel le matériau à souder (14) est choisi parmi du PRFC, d'autres composites, des métaux, des matières plastiques et des céramiques.

5. Système de fabrication additive par ultrasons selon l'une quelconque des revendications 1 à 4, dans lequel le robot (1) est choisi parmi des robots cartésiens ou des robots delta.

6. Système de fabrication additive par ultrasons selon l'une quelconque des revendications 1 à 5, dans lequel le canal coulissant (3) comprend des guides en queue d'aronde, des paliers linéaires à recirculation, des rails ronds à arbre linéaire et/ou des paliers linéaires.

7. Système de fabrication additive par ultrasons selon l'une quelconque des revendications 2 à 6, dans lequel l'au moins un soudeur à ultrasons (5) comprend une corne à ultrasons, qui a une forme choisie parmi plate carrée, plate rectangulaire, cylindrique, conique, arrondie, sphérique ou de type roue.

8. Système de fabrication additive par ultrasons selon l'une quelconque des revendications 1 à 7, comprenant en outre une unité auxiliaire (15), constituée d'unités à ressort, d'unités mécaniques ou d'unités hydrauliques, reliée à la tête de fabrication pour fournir une pression supplémentaire appliquée sur la surface de fabrication (13).

9. Système de fabrication additive par ultrasons selon l'une quelconque des revendications 1 à 8, comprenant en outre une unité de commande d'ultrasons reliée au soudeur à ultrasons (5) pour commander sa puissance et son amplitude.

10. Système de fabrication additive par ultrasons selon l'une quelconque des revendications 1 à 9, comprenant en outre un film polymère (11) destiné à être placé sur la surface de fabrication (14) ou dans lequel le soudeur à ultrasons (5) est en matériau polymère ou céramique, est revêtu de polymère ou de céramique, et dans lequel le matériau polymère ou céramique est de préférence choisi parmi du polyimide, du polyétherimide (PEI), du polyétheréthercétone (PEEK), du polyéthercétonecétone (PEKK), des polyamides et du carbone.

11. Système de fabrication additive par ultrasons selon l'une quelconque des revendications 8 à 10, dans lequel l'unité auxiliaire (15) comprend en outre des résistances électriques, des lasers, des éléments chauffants à induction, des éléments chauffants de bâti ou des éléments chauffants de substrat pour la fourniture de chaleur à la surface de fabrication (13).

12. Système de fabrication additive par ultrasons selon l'une quelconque des revendications 1 à 11, comprenant en outre des capteurs de température et/ou de pression.

13. Procédé de fabrication additive par ultrasons qui utilise le système de fabrication additive par ultrasons selon l'une quelconque des revendications 1 à 12 et un matériau à souder (14), le procédé comprenant les étapes consistant en :
a) la détermination d'une première amplitude et d'une première puissance pour le soudeur à ultrasons (5) ;
b) la détermination d'une première masse (7) pour l'ajour à la tête de fabrication (4) en utilisant l'unité de commande de masse (6) ;
c) la détermination d'une première vitesse pour la tête de fabrication (4) ;
d) l'activation de l'au moins un soudeur à ultrasons (5) en appliquant la première puissance et la première amplitude ;
e) le déplacement du robot (1) ou du bras robotisé (1) selon une trajectoire prédéterminée en appliquant la première vitesse ;
f) la mesure d'une température sur la surface de fabrication (13) ;
g) la mesure d'une pression appliquée par les masses sur la surface de fabrication (13) ;
h) la modification de la première amplitude et de la première puissance du soudeur à ultrasons (5), et la première masse (7) étant déterminée pour augmenter ou diminuer la température et la pression mesurées de manière à obtenir une température de soudage et une pression de soudage pour le matériau à souder (14), connues au préalable, en optimisant en même temps la première vitesse.

14. Procédé de fabrication additive par ultrasons selon la revendication 13, dans lequel une distance entre la surface de fabrication (13) du matériau à souder (14) et la tête de fabrication (4) à l'étape de déplacement du robot ou du bras robotisé est maintenue pour commander l'épaisseur du matériau à souder (14).

15. Procédé de fabrication additive par ultrasons selon la revendication 13, dans lequel l'étape de modification de la première amplitude et de la première puissance du soudeur à ultrasons (5), et de la première masse (7) déterminée pour augmenter ou diminuer la température et la pression mesurées de manière à obtenir une température de soudage et une pression de soudage pour le matériau à souder (14), connues au préalable, en optimisant en même temps la première vitesse, est réalisée en utilisant des systèmes complexes en boucle fermée et/ou des algorithmes d'apprentissage automatique.
